# EUROPÄISCHE PATENTSCHRIFT

(11) **EP 0 437 805 B1**
(45) Veröffentlichungstag und Bekanntmachung des Hinweises auf die Patenterteilung: **02.03.1994**
(21) Anmeldenummer: 90125146.2
(22) Anmeldetag: 21.12.1990
(51) Int. Cl.: C02F 1/20, C02F 9/00, B01D 19/00

(54) **Anordnung zum Austreiben leichtflüchtiger Verunreinigungen aus dem Grundwasser**
Apparatus for the expulsion of light volatile pollutants from ground water
Dispositif pour chasser les souillures légèrement volatiles de la nappe souterraine

(30) Priorität: 16.01.1990 DE 4001012
(43) Veröffentlichungstag der Anmeldung: 24.07.1991
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- GB-A- 2 185 901
- US-A- 4 365 978

## Beschreibung

Die Erfindung betrifft eine Anordnung zum Austreiben leichtflüchtiger Verunreinigungen aus dem Grundwasser und dem von ihm durchströmten Erdreich durch Einbringen von Luft oder anderen Gasen in eine Bohrung im Erdreich und anschließendem Absaugen der mit Kontaminationsstoffen angereicherten Luft.

Bislang bekannte Anlagen zur Grundwasserreinigung durch Einpressen von Luft arbeiten mit zwei sogenannten Bodenlanzen, die in zwei getrennte, in einem bestimmten Abstand voneinander angebrachte Bodenbohrungen eingebracht sind. Eine dieser Lanzen dient dem Einführen von Luft in das Erdreich, während die andere Bodenlanze die Aufgabe hat, die Luft wieder abzusaugen, nachdem diese beim Durchgang durch das Erdreich leichtflüchtige Kontaminationsstoffe aufgenommen hat und mit sich führt. Diese Anordnungen haben den Nachteil, daß durch das Einpressen der Gase in die eine Bohrung Verunreinigungen im Erdreich verbreitet werden, da von der zweiten Bodenlanze nicht das gesamte Gas wieder abgesaugt werden kann. Dieser Nachteil läßt sich auch nicht dadurch beheben, daß mehrere Absauglanzen im Erdreich eingebracht werden. Es kann niemals die gesamte Luft auch wieder abgesaugt werden.

Durch die GB-A-2 185 901 ist eine Einrichtung zum Ausstrippen von leichtflüchtigen Verunreinigungen aus dem Grundwasser bekannt, die in einem bis in den Grundwasserbereich getriebenen und mit einem perforierten Rohr ausgekleideten Brunnenschacht angeordnet ist. Durch ein zentrales, in einem Verteilerkopf endendes Rohr wird Druckluft eingegeben, die durch das Grundwasser nach oben unter Erzielung eines Strippeffektes aufsteigt. Diese Einrichtung hat den Nachteil, daß keine Absaugung der Luft, also keine Unterdruckbildung in dem wasserfreien Bereich des Bohrschachtes erfolgt, so daß sich ein Stauüberdruck im Bohrschacht bilden kann. Außerdem verhindert das perforierte Auskleidungsrohr den Zufluß des Grundwassers in die Bohrung, wo keinerlei Maßnahmen zur Steuerung der Luftführung getroffen sind.

Der Erfindung liegt die Aufgabe zugrunde, eine Anordnung der eingangs genannten Art zur Grundwasserreinigung für einen hohen Wirkungsgrad so auszubilden, daß bei ihr eine Verbreitung einer Verunreinigung vermieden wird.

Die gestellte Aufgabe wird erfindungsgemäß mit den aus dem kennzeichnenden Teil des Hauptanspruches ersichtlichen Merkmalen erreicht. Das innere Rohr kann zweckmäßigerweise am oberen Ende mit einer regulierbaren Druckpumpe zum Einleiten von Frischluft oder anderen Gasen verbunden sein. Der geschlossenwandige Topfeinsatz im unteren Bohrungsbereich, in welchen die eingeleitete Luft ausströmt, bewirkt ein Umlenken der Luftströmung in vertikaler Richtung nach oben und verhindert so ein seitliches Ausströmen der Luft aus der Bohrung und ein dadurch bedingtes horizontales Ausbreiten von Kontaminationsstoffen im Erdreich. Das äußere der beiden konzentrischen Rohre kann an seinem oberen Ende zweckmäßigerweise mit einer regulierbaren Saugpumpe zum Absaugen der Luft oder anderer Gase verbunden sein. Es endet vorteilhafterweise oberhalb des Grundwasserspiegels in der Bohrung, wobei seine Wandung im unteren Endbereich mit Lochungen versehen sein kann. Dadurch wird das Absaugen der Luft oder anderer Gase begünstigt.

Auf ihrem Wege vom unteren Bohrungsende zur Absaugstelle bindet die Luft im Grundwasser enthaltene Kontaminationsstoffe, die anschließend mit ihr zusammen abgesaugt werden. Dabei können im Bereich der Lochungen des äußeren Rohres Doppelmantel-Netzfilter angeordnet sein, die einer ersten Grobreinigung sowie der Abscheidung von Wasser aus der Luft oder den Gasen dienen. Die Saug- bzw. Druckleistungen der beiden Pumpen sind zweckmäßigerweise entsprechend der Aufnahmekapazität der Bohrung sowie der Bodenbeschaffenheit regulierbar.

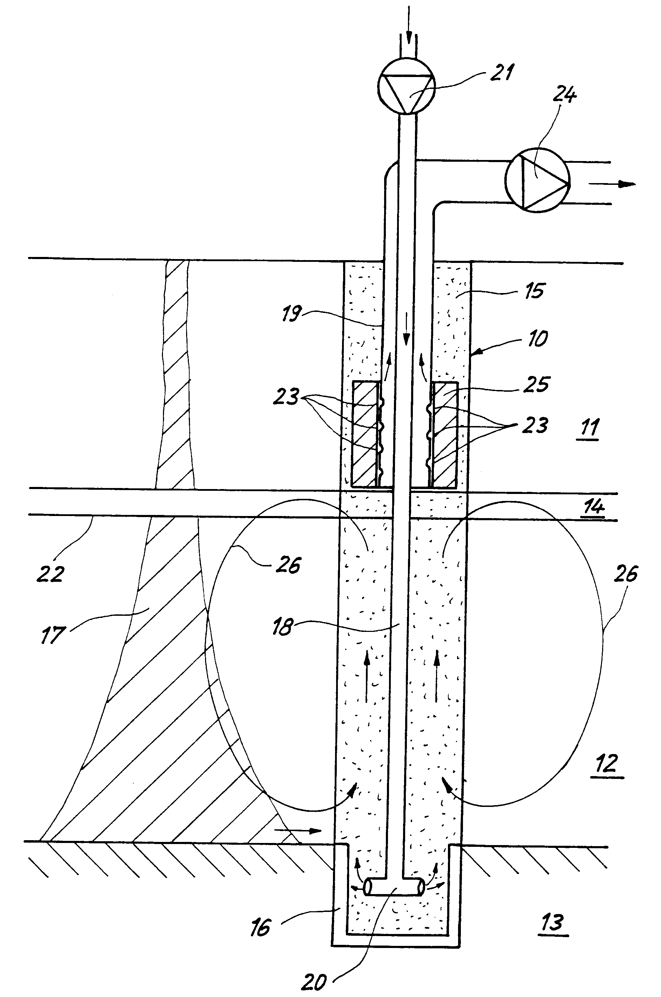

Nachfolgend wird ein Ausführungsbeispiel einer erfindungsgemäßen Anordnung anhand der Zeichnung näher erläutert.

Die Zeichnung stellt einen schematischen Längsschnitt durch die Anordnung dar. Eine Bohrung 10 ist in das zu reinigende Erdreich 11 durch eine Grundwasser führende Schicht 12 hindurch bis zu einer wasserundurchlässigen Schicht 13 getrieben. Die Grundwasser führende Schicht 12 wird an ihrem oberen Rand durch einen Kapillarsaum 14 begrenzt, der grundwasser-ungesättigt ist. Die Bohrung 10 ist mit Filterkies 15 aufgefüllt. An ihrem unteren Ende ist sie durch einen geschlossenwandigen Topfeinsatz 16 abgeschlossen. Neben der Bohrung 10 ist ein Kontaminationsbereich 17 angedeutet, der sich nach unten hin kegelförmig ausbreitet und dabei in den Einflußbereich der Reinigungsanordnung gelangt.

In der Mitte der Bohrung sind zwei konzentrische Rohre 18 und 19 angeordnet, wobei das innere dieser Rohre 18 bis in das Innere des Topfeinsatzes 16 reicht und dort durch einen Verteilerkopf 20 abgeschlossen ist. Am oberen Ende des Rohres 18 ist eine Druckpumpe 21 zur Zuleitung von Frischluft oder anderen Gasen angeordnet. Das äußere Rohr 19 endet oberhalb des Grundwasserspiegels 22 in der Bohrung 10 und ist in seinem unteren Bereich mit Lochungen 23 versehen. Am oberen Ende des äußeren Rohres 19 ist eine Saugpumpe 24 angeschlossen. Die Bohrung 10 weist im Bereich der Lochungen 23 des äußeren Rohres 19 Doppelmantel-Netzfilter 25 zur Reinigung der Luft oder des Gases und zum Abscheiden von Wasser auf.

Über das innere Rohr 18 und die Pumpe 21 gelangt Frischluft oder auch ein anderes Gas in den Topfeinsatz 16 der Bohrung 10 und strömt darin durch den Verteilerkopf 20 in horizontaler Richtung aus. Der Verteilertopf 16 lenkt diese horizontale Luftströmung um und zwingt die Luft zu einer Strömungsbewegung in vertikaler Richtung nach oben. Diese Bewegung wird zusätzlich durch das auftretende Druckgefälle zwischen dem unteren Ende der Bohrung 10 und dem unteren Ende des Ansaugrohres 19, das durch die Saugpumpe 24 verursacht wird, verstärkt. Bei ihrer Aufwärtsströmung durch den grundwassergesättigten Filterkies der Bohrung 10 kann die Luft leichtflüchtige Verschmutzungsstoffe aus dem Grundwasser lösen und mit nach oben transportieren. Die Filter 25, die vor den Lochungen 23 des Absaugrohres 19 angeordnet sind, reinigen die Luft und scheiden Wasser aus ihr ab, bevor die Luft durch die Pumpe 24 wieder ins Freie oder zu einer äußeren Filteranlage befördert wird. Die Vertikalströmung der Luft oder der Gase in der Bohrung von unten nach oben bewirkt gleichzeitig eine Vertikalströmung des Grundwassers im umliegenden Erdreich von oben nach unten. Dadurch wird nicht nur eine horizontale Ausbreitung von Kontaminationsstoffen im Erdreich verhindert, sondern es wird zudem eine Umwälzung des Grundwassers durch die Bohrung hindurch und damit ein höherer Wirkungsgrad erzielt. Durch die regulierbaren Pumpenleistungen kann die Anlage leicht an unterschiedliche Gegebenheiten, wie Bohrungsdurchmesser oder Bodendichte, angepaßt werden. Die Anlage erlaubt somit ein effizientes und sicheres Reinigungsverfahren für alle Grundwasser führenden Bodenschichten.

## Patentansprüche

1. Anordnung zum Austreiben leichtflüchtiger Verunreinigungen aus dem Grundwasser und dem von ihm durchströmten Erdreich durch Einbringen von Luft oder anderen Gasen in eine Bohrung im Erdreich und anschließendem Absaugen der mit Kontaminationsstoffen angereicherten Luft, dadurch gekennzeichnet, daß die Bohrung (10) mit Filterkies (15) aufgefüllt und an ihrem unteren Ende durch einen geschlossenwandigen Topfeinsatz (16) abgeschlossen ist und in die Bohrung (10) zwei konzentrisch angeordnete Rohre (18, 19) zur Zu- und Ableitung von Gasen eingeführt sind, wobei das äußere Rohr (19) am oberen Ende mit einer Saugpumpe (24) verbunden ist und das innere der beiden Rohre (18), das zur Gaseinleitung dient, am oberen Ende mit einer Druckpumpe (21) verbunden ist und bis in das Innere des Topfeinsatzes (16) reicht und dort in einem mit Gasaustrittsöffnungen versehenen Verteilerkopf (20) endet.

2. Anordnung nach Anspruch 1, dadurch gekennzeichnet, daß das äußere Rohr (19) in der Bohrung (10) oberhalb des Wasserspiegels (22) endet und seine Wandung im unteren Rohrbereich mit Lochungen (23) versehen ist.

3. Anordnung nach einem der Ansprüche 1 oder 2, dadurch gekennzeichnet, daß in der Bohrung (10) im Bereich der gelochten Wandung (23) des äußeren Rohres (19) Doppelmantel-Netzfilter (25) angeordnet sind.

4. Anordnung nach einem der Ansprüche 1 bis 3, dadurch gekennzeichnet, daß die Leistung der Druck- und der Saugpumpe (21, 24) regulierbar ist.

## Claims

1. Arrangement for the expulsion of light volatile impurities from groundwater and the soil it flows through by way of entering air and other gases into a bore in the soil and subsequent sucking off of the air which is then enriched with contaminated materials, **characterised in** **that** the bore (10) is filled with filter gravel (15) and at its bottom end sealed by a sealed-wall trough insert (16), and into the bore (10) are inserted two concentrally arranged pipes (18, 19) for delivery and expulsion of gases, in which respect the outer pipe (19) is at the upper end connected to a suction pump (24) and the inner pipe (18) of the two pipes, which serves the introduction of a gas, is connected at the top end to a pressure pump (21) and extends into the trough insert (16) where it terminates in a distributor head (20) which is provided with gas-outlet openings.

2. Arrangement according to claim 1, **characterised** **in that** the outer pipe (19) terminates in the bore (10) above water level (22), and its wall is provided with perforations (23) in its lower pipe area.

3. Arrangement according to one of claims 1 or 2, **characterised in that** double-casing damping filters (25) are arranged in the bore (10) in the area of the perforated wall (23) of the outer pipe (19).

4. Arrangement according to one of claims 1 to 3, **characterised in that** the output of the pressure pump and the suction pump (21, 24) is adjustable.

## Revendications

1. Dispositif pour chasser les souillures légèrement volatiles de la nappe souterraine et de la terre traversée par celle-ci par apport d'air ou d'autres gaz dans un perçage dans la terre et ensuite aspiration de l'air enrichi en produits de contamination, caractérisé en ce que le perçage (10) est rempli de gravier de filtrage (15) et est fermé à son extrémité inférieure par un insert en forme de pot à parois fermées (16) et deux tubes (18, 19) disposés concentriquement sont introduits dans le perçage (10) pour l'amenée et l'évacuation de gaz, le tube extérieur (19) étant relié à une pompe aspirante (24) à l'extrémité supérieure et le plus intérieur des deux tubes (18), qui sert à l'introduction des gaz, étant relié à une pompe foulante (21) à l'extrémité supérieure et parvenant jusque dans l'intérieur de l'insert en forme de pot (16) et se terminant là dans une tête de distribution (20) munie d'ouvertures de sortie des gaz.

2. Dispositif selon la revendication 1, caractérisé en ce que le tube extérieur (19) se termine dans le perçage (10) au-dessus du niveau d'eau (22) et sa paroi est munie de perforations (23) dans la zone inférieure du tube.

3. Dispositif selon l'une des revendications 1 ou 2, caractérisé en ce que des filtres à filet à enveloppe double (25) sont disposés dans le perçage (10) dans la zone de la paroi perforée (23) du tube extérieur (19).

4. Dispositif selon l'une des revendications 1 à 3, caractérisé en ce que la puissance de la pompe foulante et de la pompe aspirante (21, 24) est réglable.
